# EUROPÄISCHE PATENTSCHRIFT

(11) **EP 1 156 320 B1**
(45) Veröffentlichungstag und Bekanntmachung des Hinweises auf die Patenterteilung: **23.04.2008**
(21) Anmeldenummer: 00810437.4
(22) Anmeldetag: 19.05.2000
(51) Int. Cl.: G01N 15/06, G01N 27/66

(54) **Verfahren zum dynamischen Nachweis der Anzahldichte und Grösse von nanometrischen Partikeln in Gasen**
Method for dynamical detecting the concentration and size of nano-particles in gases
Procédé de détection dynamique de la concentration et de la grandeur de particules nanométriques dans des gaz

(43) Veröffentlichungstag der Anmeldung: 21.11.2001
(73) Patentinhaber: Matter Engineering AG, 5610 Wohlen (CH)
(72) Erfinder: Burtscher, Heinz, 8964 Rudolfetetten (CH); Siegmann, Hans-Christof, 8704 Herrliberg (CH)
(74) Vertreter: Frei Patent Attorneys

(56) Entgegenhaltungen:
- EP-A- 0 503 327
- WO-A-96/28718
- DE-A- 4 305 704
- DE-A- 4 429 831
- DE-A- 19 824 744
- DE-C- 3 417 525
- US-A- 3 526 828
- US-A- 3 997 297
- US-A- 5 254 861

## Beschreibung

Nanometrische Partikel sind feste oder flüssige Partikel oder Teilchen, deren Abmessungen im Nanometerbereich liegen. Sie können in Gasen schweben, man spricht dann auch von einem ultrafeinen Aerosol. Die Bestimmung der chemischen und physikalischen Eigenschaften solcher Partikel ist von grösstem Interesse, da sie im menschlichen Atmungstrakt deponiert werden können und damit eine Gefahr für die öffentliche Gesundheit darstellen. Auch eine Reihe unerwünschter chemischer Reaktionen in der Atmosphäre wird an der Oberfläche der Partikel katalysiert. Die Mehrzahl der in der Atmospäre vorhandenen Nanopartikel stammt aus der Verbrennung organischen Materials, aber es gibt auch natürliche ultrafeine Aerosole, die bei der Nebel- und Wolkenbildung eine wichtige Rolle spielen.
Es sind eine Reihe von Verfahren bekannt, mit denen die Grösse und chemische Zusammensetzung der Nanopartikel bestimmt werden können. Man unterscheidet "in-situ" Verfahren, bei denen die Messung direkt an den Partikeln in ihrem Trägergas erfolgt, und Sammel-Verfahren, bei denen die Partikel zuerst auf einem Substrat oder dergleichen gesammelt und anschliessend gewogen und/oder chemisch analysiert werden. Das erfindungsgemässe Verfahren ist ein in-situ Verfahren, mit dem instantane Informationen über die Grössenverteilung und die chemische Beschaffenheit von Nanopartikeln in einem Trägergas, das ein Prozessgas oder normale Aussenluft sein kann, gewonnen werden.
Das wichtigste bekannte in-situ Verfahren zur Bestimmung eines Grössenparameters der Nanopartikel beruht auf der Bestimmung der Beweglichkeit b der Nanopartikel im Trägergas. Die Beweglichkeit ist über den linearen Reibungsansatz V = bF definiert, bei dem unter der Einwirkung einer äusseren Kraft F eine konstante Geschwindigkeit V erreicht wird. Die durch Messung von V bei bekannter Kraft F bestimmte Reibungskonstante 1/b ist durch den beim Impuls- und Energieübertrag vom Partikel auf das Gas wirksamen Stossquerschnitt gegeben, wobei ein Zahlenfaktor von der Grössenordnung 1.4 die Art der Reflexion der Gasmoleküle an der Partikeloberfläche berücksichtigt. Zusätzlich kommt bei grösseren Partikeln zunehmend die Hydrodynamik ins Spiel, weil der Impulsaustausch vom Strömungsprofil um die Partikel beeinflusst wird. Aus der gemessenen Beweglichkeit wird üblicherweise mittels einer von N.A.Fuchs [1] tabellierten Funktion der Beweglichkeitsdurchmesser Dp der Partikel ermittelt. Dp² ist proportional zum Stossquerschnitt der Partikel mit den Molekülen des Trägergases, der in der Literatur mit "Fuchsoberfläche" oder auch "aktive" Oberfläche bezeichnet wird. Aus der Messung der Beweglichkeit b wird also primär die "aktive" Oberfläche bestimmt. Man muss beachten, dass die "aktive" Oberfläche kleiner als die geometrische Oberfläche der Partikel ist, vor allem weil die Nanopartikel oft bizarre Formen mit vielen Buchten, Spalten und eingeschlossenen Binnenflächen aufweisen, die nicht zum Impulsübertrag beitragen.
Die zur Messung von b erforderliche Kraft F wird üblicherweise dadurch erzeugt, dass die Partikel vorzugsweise mit einer einzigen Elementarladung e aufgeladen werden, und danach mit dem Trägergas in das elektrische Feld E eines Kondensators gelangen. Dort wirkt dann die Kraft F = e E, welche die Partikel gemäss ihrer Beweglichkeit auf eine Geschwindigkeit V bringt. Nach Massgabe von V treten die Partikel durch einen Schlitz aus dem Kondensator aus. Danach werden die so aussortierten Partikel mit dem Gas zum Teilchenzähler getragen, der üblicherweise ein Kondensationskernzähler ist. Durch Variation der Spannung am Kondensator kann so das Spektrum der Beweglichkeiten der Nanoteilchen abgetastet werden. Ein solches Instrument, bekannt als differentieller Beweglichkeitsanalysator, liefert sehr gute und recht zuverlässig Beweglichkeitspektren, hat jedoch verschiedene Nachteile. Ein Nachteil entsteht aus dem Umstand, dass das Spektrum abgetastet werden muss, was eine längere Zeit in Anspruch nimmt, so dass transiente Vorgänge wie sie z.B. in Verbrennungsmaschinen auftreten, nicht erfasst werden. Ein anderer Nachteil besteht darin, dass das komplette System inklusive Kondensationskernzähler sehr teuer und delikat ist und für Feldmessungen kaum in Frage kommt. Zudem ist die elektrische Aufladung der Nanopartikel sehr kritisch. Erhält nämlich eine Partikel zwei elementare Ladungen, so tritt sie durch den Ausgansspalt mit viel kleineren einfach geladenen Partikeln. Um diese Störung in akzeptablem Rahmen zu halten, muss die durch Anlagerung von Gasionen an die Partikel bewerkstelligte Aufladung genügend schwach und vor allem sehr stabil sein. In der Praxis werden dabei nur etwa 1% der Partikel von den mit einem radioaktiven Präparat erzeugten Gasionen aufgeladen, d.h. die meisten Teilchen werden gar nicht zur Messung genützt.
Schliesslich gibt die Messung der Beweglichkeit von den mittels Anlagerung von Gasionen aufgeladenen Nanopartikeln keinerlei stoffliche Informationen, weil diese Aufladung bis herab zu einem Beweglichkeitsdurchmesser von mindestens 10 nm unabhängig vom Teilchenmaterial erfolgt [2].

Die deutsche Patentschrift 3417525 lehrt eine Vorrichtung zur Erfassung von kohlenwasserstoffhaltigen Schwebeteilchen, wobei die Teilchen photoelektrisch aufgeladen und anschliessend in grössenselektiven Filtern abgeschieden werden.

Demgegenüber wird im erfindungsgemässen Verfahren die Beweglichkeit nicht durch Ablenkung in einem Kondensator, sondern durch die Diffusion der Nanopartikel auf eine Wand bestimmt. Die Diffusionskonstante D ist durch D = kTb gegeben. Also kann bei bekanntem Boltzmannfaktor kT die Messung von b durch die Messung von D ersetzt werden. Lässt man das Trägergas mit den Nanoteilchen durch einen porösen Körper strömen, so ist bei Nanoteilchen im Grösenbereich von unterhalb 200 nm und bei Normalbedingungen des Trägergases die Abscheidung auf den Wänden des porösen Körpers überwiegend durch die Diffusion gegeben. Man kann daher bekanntermassen aus dem Massenfluss Q des Trägergases und der Geometrie des porösen Körpers die Diffusionskonstante der Partikel aus dem gemessenen Bruchteil der abgeschiedenen Partikel bestimmen. Verschiedene Autoren haben nachgewiesen, dass die diffusive Abscheidung an elektrisch leitenden Wänden nicht von der elektrischen Ladung der Teilchen abhängt. Dies stellt einen Vorteil des erfindungsgemässen Verfahrens gegenüber der Messung der elektrischen Beweglichkeit dar.

Das erfindungsgemässe Verfahren zeichnet sich nun ferner dadurch aus, dass das zu messende Trägergas mit den Partikeln in zwei gleiche Teilströme aufgeteilt wird. In einem Teilstrom werden die Partikel durch die Anlagerung von Gasionen aufgeladen. Der Grad dieser Aufladung ist durch die Grösse der "aktiven" Oberfläche gegeben und ist unabhängig von der stofflichen Zusammensetzung der Partikel [2]. Im zweiten Teilstrom werden die Partikel dagegen photoelektrisch aufgeladen. Der Grad der photoelektrischen Aufladung ist durch das Produkt aus "aktiver" Oberfläche und der chemischen Beschaffenheit der Teilchen gegeben [3]. Der Quotient beider elektrischer Aufladungen ist somit unabhängig von der Teilchengeometrie nur von der chemischen Beschaffenheit der Teilchen bestimmt und stellt somit die gesuchte Kennzahl für die chemische Zusammensetzung der Teilchen dar.
Man kann das erfindungsgemässe Verfahren aber auch mit einer einzigen elektrischen Aufladung verwirklichen, nämlich z.B. dann, wenn man ausschliesslich die Partikel welche polyzyklische aromatische Kohlenwasserstoffe an der Oberfläche angelagert haben, messen will. Solche Teilchen stammen aus unvollständiger Verbrennung und werden bekanntlich sehr effizient photoelektrisch aufgeladen [4]. In dieser Anwendung ist also nur eine photoelektrische Aufladung vorgesehen. Umgekehrt kann man bei einer anderen speziellen Anwendung des Verfahrens z.B. auf die Beobachtung von Kondensationsvorgängen wo es lediglich auf die Grössenverteilung der Partikel ankommt weil die stoffliche Zusammensetzung bereits bekannt ist, ausschliesslich die Anlagerung von Gasionen zur elektrischen Aufladung der Partikel verwenden.

Im erfindungsgemässen Verfahren geschieht nun weiterhin die Ermittlung der auf die Wandungen des porösen Körpers diffundierten Teilchen dadurch, dass der poröse Körper elektrisch leitet, jedoch isoliert in einem metallischen Gehäuse untergebracht ist, und ferner der elektrische Strom gemessen wird, der dann entsteht, wenn die geladenen Nanoteilchen die Wand des porösen Körpers erreichen und dort ihre Ladung abgeben. Nun ist die Diffusionskonstante D gemäss D = kTb genauso wie die Bweglichkeit b umgekehrt proportional zur "aktiven" Oberfläche der Teilchen. Kleinere Teilchen diffundieren daher schneller auf die Wand als grössere. Der poröse Körper wird daher erfindungsgemäss in N Teile aufgeteilt, so dass stromabwärts sukzessive immer grössere Teilchen in den porösen Teilkörpern zur Abscheidung gelangen. Misst man nun erfindungsgemäss an jedem Teilkörper den elektrischen Strom, so erhält man Auskunft über die Beweglichkeitsverteilung der Nanopartikel in einem parallelen Messverfahren, wobei die Information über das Teilchenspektrum mit der Zeitkonstante der Messung des elektrischen Stroms an den porösen Teilkörpern erhalten wird. Am Ende der aus N Teilen bestehenden Diffusionsbatterie befindet sich noch ein "back-up" Filter oder Endfilter, in welchem sämtliche noch vorhandenen Teilchen abgeschieden werden. Der elektrische Strom am Endfilter zeigt also vorwiegend die grössten Teilchen an.

Bei der an und für sich bekannten Ladung der Nanopartikel durch Anlagerung von Gasionen ist der Bruchteil der elektrisch geladenen Teilchen Z zu den neutral gebliebenen Teilchen Zo gegeben durch Z/Zo = 1 - exp.(K.t.m) wobei m die Konzentration der Gasionen im Aufladegerät und t die Zeit ist, welche die Nanoteilchen im Lader verbracht haben. t wird durch die Strömungsgeschwindigkeit des Trägergases bestimmt. K ist der sog. Massenanlagerunskoeffizient, der bei der Anlagerung von Gasionen wiederum der "aktiven" Oberfläche der Teilchen proportional ist. Daher gilt im hier interessierenden Grössenbereich von Beweglichkeitsdurchmessern unterhalb einem Mikrometer das Gesetz K D = const. Zu jeder Diffusionskonstante gehört also ein bestimmer Aufladegrad der Nanopartikel. Daher kann man durch die Messung der Ströme an der Diffusionsbatterie auch die Partikelzahl bestimmen. Es ist deshalb möglich, auf den teuren und empfindlichen Kondensationskernzähler zu verzichten. Dies stellt einen weiteren wichtigen Vorteil des erfindungsgemässen Verfahrens dar.

Das erfindungsgemässe Verfahren lässt sich auf vielerlei Weise verwirklichen. Das nachfolgende spezielle Beispiel soll eine spezifische Ausführungsform aufzeigen ohne jedoch einschränkend zu wirken.

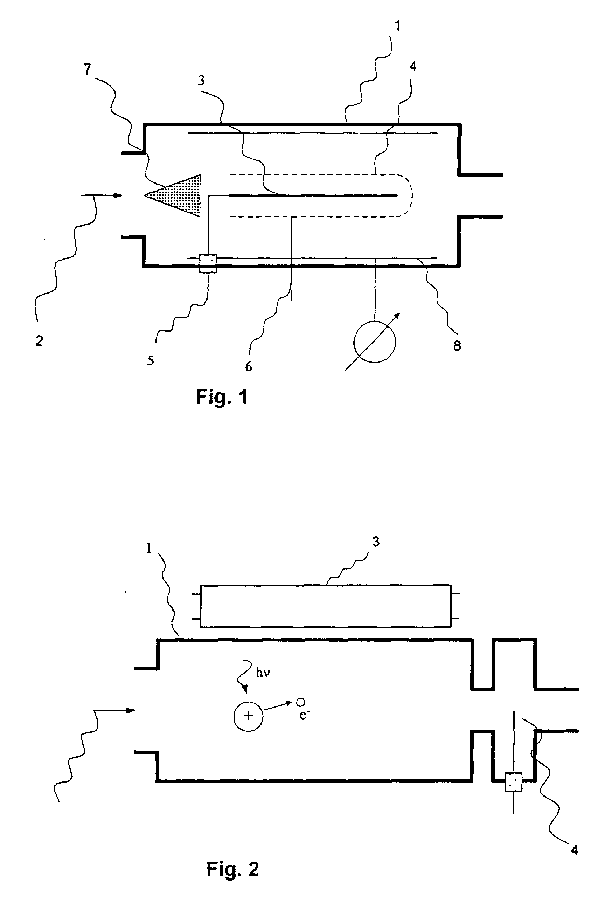

Fig. 1 zeigt eine Möglichkeit, die Anlagerung von Gasionen an die Teilchen zu bewerkstelligen. Der Gasionenlader ist in dem geerdeten zylindrischen Gehäuse 1 untergebracht, welches vom Trägergas mit den Teilchen in Pfeilrichtung 2 durchströmt wird. In der Zylinderachse des Gehäuses 1 befindet sich ein feiner Draht 3, der von einem zylindrischen Netz 4 umschlossen ist. Die isolierten Zuführungen 5 und 6 ermöglichen es, eine Hochspannung zwischen Draht 3 und Netz 4 aufrecht zu halten, derart, dass sich eine stille Entladung ausbildet. Die Blende 7 verhindert, dass das Trägergas mit den Teilchen in die Entladungszone einströmt. Die in der Gasentladung gebildeten Gasionen eines durch die Polarität der Hochspannung am Draht 3 bestimmten Vorzeichens diffundieren durch das Netz 4 in das Trägergas mit den Nanoteilchen. Eine nahe der Gehäusewand 1 angebrachte weitere zylindrische Elektrode 8 trägt eine kleine Spannung gegenüber dem Netz 4, mit der die Gasionen langsam aus dem Trägergas der Nanopartikel abgesaugt und ihre Konzentration bestimmt werden kann. Die Konzentration m der Gasionen wird durch Nachregulieren der Hochspannung zwischen Elektrode 3 und 4 konstant gehalten.

Der photoelektrische Auflader in Fig. 2 besteht aus einer Quarzröhre 1, welche wiederum vom Trägergas der Teilchen in Pfeilrichtung 2 durchströmt wird. Das Licht einer im ultravioletten emittierenden Lampe 3 dringt durch das Quarzrohr 1 in das Trägergas mit den Teilchen, von denen Photoelektronen emittiert werden. Dadurch können die Teilchen eine oder mehrere positive elektrische Ladungen erhalten. Die Photoelektronen bzw. die aus ihnen gebildeten negativen Gasionen besitzen eine hohe elektrische Beweglichkeit auf Grund der sie in der Ionenfalle 4 aus dem Trägergasstrom entfernt werden während die positiv geladenen Nanoteilchen im Trägergastsrom verbleiben.

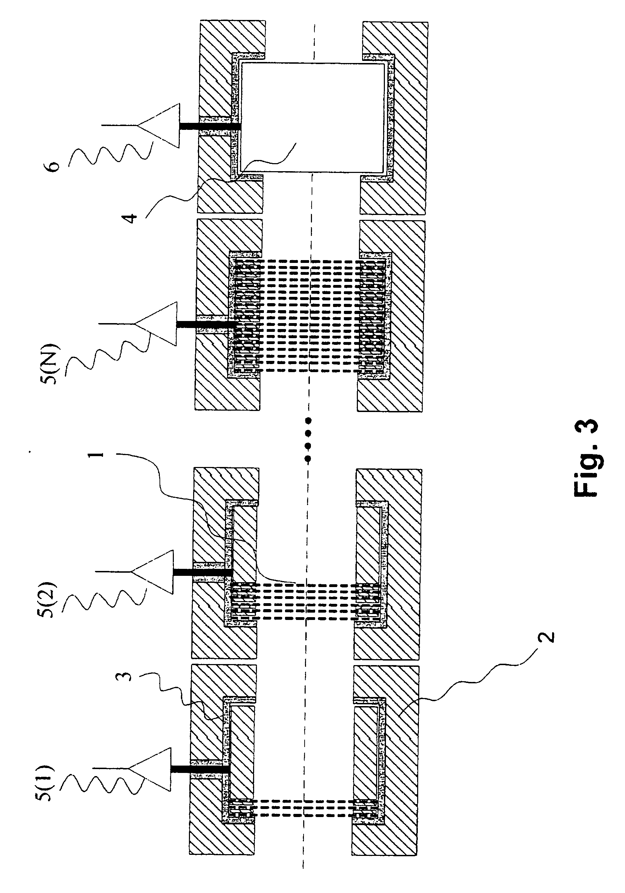

Fig.3 zeigt eine Ausführung des N-stufigen Diffusionsabscheiders mit Endfilter. Dem Gasionenauflader sowie dem photoelektrischen Auflader ist je ein solches Gerät nachgeschaltet. Die einzelnen Stufen bestehen aus ebenen Drahtnetzen 1, die senkrecht zur Strömungsrichtung des Trägergases gestapelt sind . Die Zahl n der Netze nimmt von der ersten zur N-ten Stufe zu. Die Netze 1 sind in einem Block 2 aus Aluninium dicht gestapelt, jedoch von den Blöcken 2 mittels der Isolatoren 3 elektrisch isoliert. Der N-ten Stufe folgt das Endfilter 4, in welchem sämtliche noch verbliebenen Teilchen abgeschieden werden. Auch das Endfilter 4 ist mit einem Isolator 3 isoliert. Die Verstärker 5(1), 5(2) bis 5(N) sowie 6 messen den Strom der auf den Diffusionsbatterien 1-N bzw. im Endfilter 4 mit den Nanoteilchen abgeschieden wird. Eine nicht gezeichnete Pumpe hält einen konstanten Massenfluss des Trägergases durch den Diffusionsabscheider mit Endfilter aufrecht. Die 2x(N+1) Stromsignale von den beiden Diffusionsabscheidern mit Endfiltern werden einem Rechner zugeführt, der gemäss einem bestimmten Program aus diesen Messwerten die Grössenverteilung und die Anzahlkonzentration sowie die chemische Kennzahl in jeder Grössenklasse ermittelt.

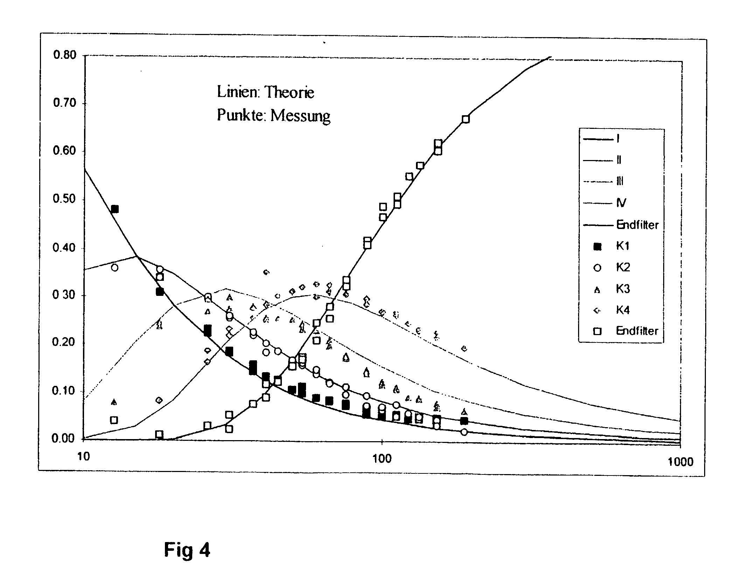

Fig.4 zeigt das Ergebnis von Testmessungen an einem erfindungsgemässen 4-stufigen Diffusionsabscheider mit Endfilter. Die für den Test verwendeten nanometrischen Körper waren NaCl-Teilchen, die durch Versprühen einer Salzlösung erzeugt wurden. Die Teilchen wurden elektrisch durch Anlagerung von Gasionen aufgeladen und in einem differentiellen Beweglichkeitsanalysator wurde jeweils ein bestimmter Beweglichkeitsdurchmesser aussortiert, wonach das die jetzt monodispersen Teilchen enthaltende Trägergas den Diffusionsabscheider mit Endfilter durchströmte. Die Figur zeigt die prozentuale Abscheidung in den einzelnen Elementen des erfindungsgemässen Abscheiders wie sie aus den gemessenen elektrischen Strömen ermittelt wurde. Die ausgezogenen Kurven sind nach der Theorie von H.G.Scheibel und J.Porstendörfer [5] berechnet. Man sieht, dass die in den einzelnen Stufen des Diffusionsabscheiders gemessenen elektrischen Ströme sehr gut mit der berechneten Abscheidung übereinstimmen. Auch der im Endfilter gemessene Strom entspricht genau den Erwartungen. Damit ist an einem Beispiel gezeigt, wie das erfindungsgemässe Verfahren funktionniert. Es folgt, dass mit polydispersen ultrafeinen Aerosolen in der Tat die Rekonstruktion eines Beweglichkeitsspektrums der Teilchen möglich ist.

### Literatur

1. N.A.Fuchs, The Mechanics of Aerosols, Pergamon Press 1964
2. A.Keller, K.Siegmann, und H.C.Siegmann, Proc. of the 3rd. ETH-Workshop on Nanoparticle Measurment, Bundesamt für Umwelt, Wald und Landschaft, Bern 1999
3. K.Siegmann, L.Scherrer, H.C.Siegmann, J. of Molecular Structure (Theochem) 458 (1999) 191-201
4. H.Burtscher, J.Aerosol Sci.23 (1992) 549 -595
5. H.G.Scheibel and J. Porstendörfer, J.Aerosol Sci.15 (1984) 673 - 682

## Patentansprüche

1. Verfahren zum dynamischen Nachweis von nanometrischen Partikeln in einem Gas, wobei die nanometrischen Partikel unipolar elektrisch aufgeladen werden, und das sie enthaltende Gas nacheinander mehrere elektrisch isolierte poröse Körper oder dergleichen durchströmt, derart, dass stromabwärts sukzessive immer grössere Teilchen in den porösen Körpern zur Abscheidung gelangen und die elektrische Ströme gemessen werden welche an den besagten porösen Körpern durch Diffusion der nanometrischen Partikel auf die Wände der porösen Körper entstehen, **dadurch gekennzeichnet, dass** die nanometrischen Partikel unipolar elektrisch aufgeladen werden, indem Gasionen angelagert werden, und dass aus den Strömen eine Grössenverteilung der nanometrischen Partikel ermittelt wird.

2. Verfahren nach Anspruch 1, **dadurch gekennzeichnet, dass** den porösen Körpern ein Endfilter folgt in welchem sämtliche noch im Gasstrom verbliebenen Partikel abgeschieden werden wobei die Menge der abgeschiedenen Partikel durch die Messung des elektrischen Stroms an besagtem Endfilter erfolgt.

3. Verfahren nach Anspruch 1 oder 2, **dadurch gekennzeichnet, dass** der die Partikel enthaltende Gasstrom in zwei Teilströme aufgeteilt wird, wobei die Partikel im ersten Teilstrom photoelektrisch und nurim zweiten durch Anlagerung von Gasionen unipolar elektrisch aufgeladen werden, und dass der Quotient der elektrischen Ströme an den sich entsprechenden porösen Körpern bzw. den Endfiltern gebildet wird.

4. Verfahren nach einem der vorangehenden Ansprüche, **dadurch gekennzeichnet, dass** die porösen Körper mittels aufeinander gestapelter ebener Drahtnetze realisiert sind wobei Anzahl, Maschenweite und Drahtstärke der Netze in den einzelnen Körpern unterschiedlich sein können.

5. Verfahren nach einem der vorangehenden Ansprüche, **dadurch gekennzeichnet, dass** grössere nanometrische Partikel mittels eines bekannten Zyklons oder Impaktors oder mittels einer Zentrifuge vor der elektrischen Aufladung aus dem Trägergasstrom entfernt oder zur gesonderten Vermessung ausgeschieden werden.

6. Verfahren nach einem der vorstehenden Ansprüche, **dadurch gekennzeichent, dass** die elektrischen Ströme, welche an den porösen Körpern sowie am Endfilter gemessen werden, nach entsprechender Verstärkung einem Rechner zugeleitet werden, welcher automatisch die Grössenverteilung, die aktive Oberfläche, die Anzahl pro Volumen, sowie die chemische Kennzahl der nanometrischen Partikel berechnet und anzeigt.

7. Vorrichtung zum dynamischen Nachweis von nanometrischen Partikeln in einem Gas, aufweisend einen Auflader zur unipolaren elektrischen Aufladung der Partikel in einem in einer den Auflader in einer Strömungsrichtung durchströmenden Gas, stromabwärts des Aufladers eine Mehrzahl von in Strömungsrichtung nacheinander angeordneten elektrisch leitenden, isolierten porösen Körpern und Mittel zum Ermitteln der auf jedem porösen Körper abgeschiedenen Ströme, **dadurch gekennzeichnet, dass** der Auflader ein Diffusionsauflader ist.

8. Vorrichtung nach Anspruch 7, **gekennzeichnet durch** einen fotoelektrischen Auflader und eine Mehrzahl von stromabwärts des fotoelektrischen Aufladers angeordneten zweiten elektrisch leitenden, isolierten porösen Körpern und Mittel zum Ermitteln der auf jedem zweiten porösen Körper abgeschiedenen Ströme, sowie stromaufwärts des fotoelektrischen Aufladers und des Diffusionsaufladers angeordnete Mittel zum Aufteilen eines Trägergases in zwei Teilströme, wovon ein erster den fotoelektrischen Auflader und ein zweiter den Diffusionsauflader durchströmt.

## Claims

1. Method for dynamic verification of nanometric particles in a gas, wherein the nanometric particles are charged electrically in unipolar manner and that the gas containing them flows through several electrically insulated porous bodies or the like in succession, such that downstream successively larger particles are deposited, and the electrical currents are measured, which are generated on the said porous bodies by diffusion of the nanometric particles on the walls of the porous bodies, **characterized in that** the nanometric particles are electrically charged in unipolar manner by accumulating gas ions and that a particle size distribution of the nanometric particles is established from the currents.

2. Method according to claim 1, **characterized in that** an end filter follows the porous bodies, in which all particles remaining in the gas flow are deposited, wherein the amount of deposited particles is determined by measuring the electric current on said end filter.

3. Method according to claim 1 or 2, **characterized in that** the gas flow containing the particles is divided into two part-flows, wherein the particles in the first part-flow are photoelectrically charged and only in the second part-flow are electrically charged in unipolar manner by accumulation of gas ions and that the ratio of the electric currents on the mutually corresponding porous bodies or the end filters respectively is established.

4. Method according to one of the preceding claims, **characterized in that** the porous bodies are formed by flat wire meshes stacked on top of one another, wherein quantity, mesh size and wire gauge of the meshes in the individual bodies may be different.

5. Method according to one of the preceding claims, **characterized in that** the larger nanometric particles are removed or separated for separate measurement from the carrier gas flow by means of a known cyclone or impactor or by means of a centrifuge before the electric charging.

6. Method according to one of the preceding claims, **characterized in that** the electric currents, which are measured on the porous bodies as well as on the end filter, are, after corresponding amplification, fed into a computer, which automatically determines and displays the particle size distribution, the active surface, the quantity per volume as well as the chemical index of the nanometric particles.

7. Device for dynamic verification of nanometric particles in a gas, comprising a charger for unipolar electric charging of the particles in a gas flowing through the charger in a flow direction, downstream from the charger a plurality of electrically conductive, insulated porous bodies arranged successively in flow direction and means for determination of the currents separated on each porous body, **characterized in that** the charger is a diffusion charger.

8. Device according to claim 7, **characterized by** a photoelectric charger and, arranged downstream to the photoelectric charger, a plurality of second electrically conductive, insulated porous bodies and means for determination of the currents separated on every second porous body, as well as, arranged upstream to the photoelectric charger and the diffusion charger, means for division of a carrier gas into two part-flows, of which a first flows through the photoelectric charger and a second through the diffusion charger.

## Revendications

1. Procédé de détection dynamique de particules nanométriques dans un gaz, dans lequel les particules nanométriques reçoivent une charge électrique unipolaire et le gaz les contenant circule successivement à travers plusieurs corps poreux isolés électriquement ou éléments similaires, de telle sorte que les particules toujours plus grandes se succédant en aval parviennent dans les corps poreux en vue d'une séparation, et les courants électriques, qui se produisent sur lesdits corps poreux par la diffusion des particules nanométriques sur les parois des corps poreux, sont mesurés, **caractérisé en ce que** les particules nanométriques reçoivent une charge électrique unipolaire, du fait que les ions gazeux se fixent, et **en ce qu'**une distribution des tailles des particules nanométriques est déterminée à partir des courants.

2. Procédé selon la revendication 1, **caractérisé en ce qu'**un filtre final, dans lequel sont séparées toutes les particules encore contenues dans le flux de gaz, est monté à la suite des corps poreux, la quantité de particules séparées étant donnée par la mesure du courant électrique au niveau dudit filtre final.

3. Procédé selon la revendication 1 ou 2, **caractérisé en ce que** le flux de gaz contenant les particules est divisé en deux flux partiels, les particules dans le premier flux de gaz recevant une charge électrique unipolaire par voie photoélectrique et seules celles dans le deuxième flux partiel recevant une charge électrique unipolaire par la fixation des ions gazeux, et **en ce que** le quotient des courants électriques est formé sur les corps poreux correspondants ou sur le filtre final.

4. Procédé selon l'une quelconque des revendications précédentes, **caractérisé en ce que** les corps poreux sont réalisés au moyen de treillis en fil plans, empilés les uns sur les autres, le nombre, la largeur du maillage et l'épaisseur du fil des treillis pouvant être différents dans les différents corps.

5. Procédé selon l'une quelconque des revendications précédentes, **caractérisé en ce que**, au moyen d'un cyclone connu ou d'un impacteur ou au moyen d'une centrifugeuse, des particules nanométriques plus grandes sont éliminées du flux de gaz porteur avant la charge électrique ou sont séparées du flux en vue d'une mesure séparée.

6. Procédé selon l'une quelconque des revendications précédentes, **caractérisé en ce que** les courants électriques, qui sont mesurés sur les corps poreux, ainsi que sur le filtre final, sont acheminés après une amplification correspondante vers un calculateur qui calcule automatiquement et affiche la distribution des tailles, la surface active, le nombre par volume, ainsi que l'indice chimique des particules nanométriques.

7. Dispositif de détection dynamique de particules nanométriques dans un gaz, comportant un chargeur pour la charge électrique unipolaire des particules dans un gaz circulant à travers le chargeur dans une direction d'écoulement, une pluralité de corps poreux électroconducteurs isolés, disposés les uns derrière les autres dans la direction d'écoulement en aval du chargeur, et des moyens pour déterminer les courants séparés sur chaque corps poreux, **caractérisé en ce que** le chargeur est un chargeur par diffusion.

8. Dispositif selon la revendication 7, **caractérisé par** un chargeur photoélectrique et une pluralité de deuxièmes corps poreux électroconducteurs isolés, disposés en aval du chargeur photoélectrique, et des moyens pour déterminer les courants déposés sur chaque deuxième corps poreux, ainsi que des moyens, disposés en amont du chargeur photoélectrique et du chargeur de diffusion et destinés à diviser un flux de gaz porteur en deux flux partiels, dont un premier circule à travers le chargeur photoélectrique et un deuxième circule à travers le chargeur de diffusion.
